# EUROPEAN PATENT SPECIFICATION

(11) **EP 2 526 322 B1**
(45) Date of publication and mention of the grant of the patent: **11.11.2015**
(21) Application number: 11702320.0
(22) Date of filing: 18.01.2011
(51) Int. Cl.: F16H 7/12

(54) **TENSIONER**
SPANNVORRICHTUNG
TENDEUR

(30) Priority: 20.01.2010 US 657463
(43) Date of publication of application: 28.11.2012
(73) Proprietor: Gates Corporation, Denver, CO 80202 (US)
(72) Inventor: WARD, Peter, Farmington MI 48331 (US); SERKH, Alexander, Troy MI 48098 (US)
(74) Representative: Tunstall, Christopher Stephen
(86) International application number: PCT/US2011/021488
(87) International publication number: WO 2011/090919

(56) References cited:
- WO-A1-2004/033933
- DE-A1-102007 015 676
- US-A1- 2003 216 204
- US-B1- 6 609 988

## Description

### Field of the Invention

The invention relates to a tensioner, and more particularly to a tensioner having a damping mechanism urged radially outward into engagement with an arm inner surface as the torsion spring is loaded in the unwinding direction and by a pivotal motion of the damping mechanism about a stop.

### Background of the Invention

The main purpose of a belt tensioner is to prolong the life of an engine or accessory drive belt. The most typical use for such automatic belt tensioners is on front-end accessory drives in an automobile engine. This drive includes pulley sheaves for each accessory the belt is required to power, such as the air conditioner, water pump, fan and alternator. Each of these accessories requires varying amounts of power at various times during operation. These power variations create a slackening and tightening situation of each span of the belt. The belt tensioner is utilized to absorb these power variations.

Representative of the art is US patent no. 6,609,988 which discloses an asymmetric damping tensioner system for belt drives on an engine. A belt is connected between a driver pulley on a crankshaft and any number of driven pulleys. Each driven pulley is connected to an accessory such as an alternator, power steering pump, compressor or the like. The tensioner is placed anywhere before the first component of significant effective inertia, in the belt movement direction. A biasing member in the tensioner is used to maintain a tension in the belt. The tensioner further comprises a damping mechanism to damp belt vibrations caused by the operation of the engine. Tensioner damping friction is unequal or asymmetric, depending upon the direction of movement of the tensioner arm. During acceleration the damping friction of the tensioner in the unloading direction is significantly lower than the damping friction in the opposite, or loading direction, as is the case during deceleration. Lower damping friction during acceleration allows the tensioner arm to quickly adjust to the increase in belt length caused by acceleration. Higher damping friction during deceleration prevents the tensioner arm from being moved too far in the loading direction thereby causing slipping and noise. Asymmetric damping also significantly diminishes overall vibration in the belt during all phases of operation.

DE 10 2007 015 676 discloses a tensioner having a brake shoe which is disposed at one spring end and which can be pressed by the spring end against a component which can rotate about the axis of rotation of a drag bearing relative to the spring end. In order to achieve good heat dissipation and uniform stress on the drag bearing, the brake shoe is disposed at the spring end such that the brake shoe is clamped between the spring end and a stop surface of a catch attached to a tensioning lever and, via a contacting force resulting from two peripheral tangential forces from the spring, can be pressed radially against an inner wall of the base housing.

### Summary of the Invention

The invention provides a tensioner as claimed hereinafter.

### Brief Description of the Drawings

The accompanying drawings, which are incorporated in and form a part of the specification, illustrate preferred embodiments of the present invention, and together with a description, serve to explain the principles of the invention.
Fig. 1 is a cross-sectional view of the tensioner.

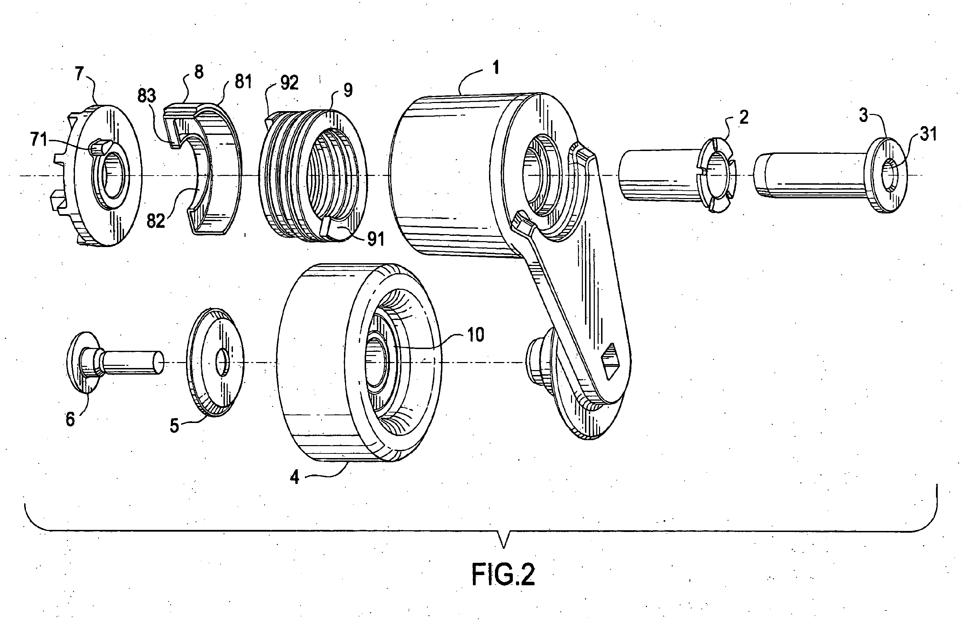

Fig. 2 is an exploded view of the tensioner.
Fig. 3 is a plan view at 3-3 of Fig. 1.
Fig. 4 is a bottom perspective view of the spring and damping mechanism.

### Detailed Description of the Preferred Embodiment

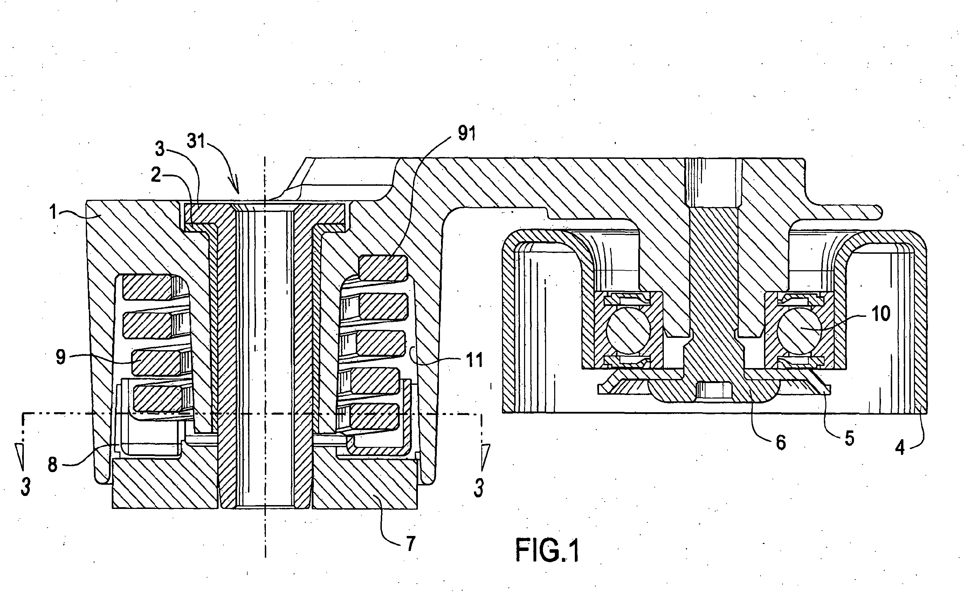

Fig. 1 is a cross-sectional view of the tensioner. Arm 1 pivots about pivot shaft 3. Pivot shaft 3 is press fit into base 7. Low friction bushing 2 is disposed between arm 1 and shaft 3.

Arm 1 is urged by torsion spring 9 against a belt (not shown). End 91 of spring 9 engages arm 1. Spring 9 comprises a flat band spring, however, any suitable spring known in the art may also be used, including a round wire spring or a wire having any other known cross-section.

A belt engages idler pulley 4. Idler pulley 4 comprises a bearing 10 that allows the pulley to rotate. Idler pulley 4 is journalled to arm 1 through bearing 10 and bolt 6. Dust shield 5 prevents debris from entering bearing 10.

End 92 of spring 9 engages damping mechanism 8. Damping mechanism 8 comprises a frictional material 81. Frictional material 81 comprises any suitable frictional material known in the art. Frictional material 81 is attached to a frame member 82 using any suitable adhesive known in the art. Frame member 82 typically comprises bent sheet metal, but may also comprise any other suitable rigid material. In the preferred embodiment, the sheet metal comprises a "thin-walled" material, for example, 20 gage material.

To create the required damping or resistant torque, damping mechanism 8 is urged by spring 9 against base 7, thereby creating a reaction which causes damping mechanism 8 to frictionally engage arm 1. This is because in operation spring 9 is loaded by arm 1 in the unwinding direction. As spring 9 unwinds each volute expands outward, thereby pressing damping mechanism 8 into frictional engagement with the inner surface 11 of arm 1.

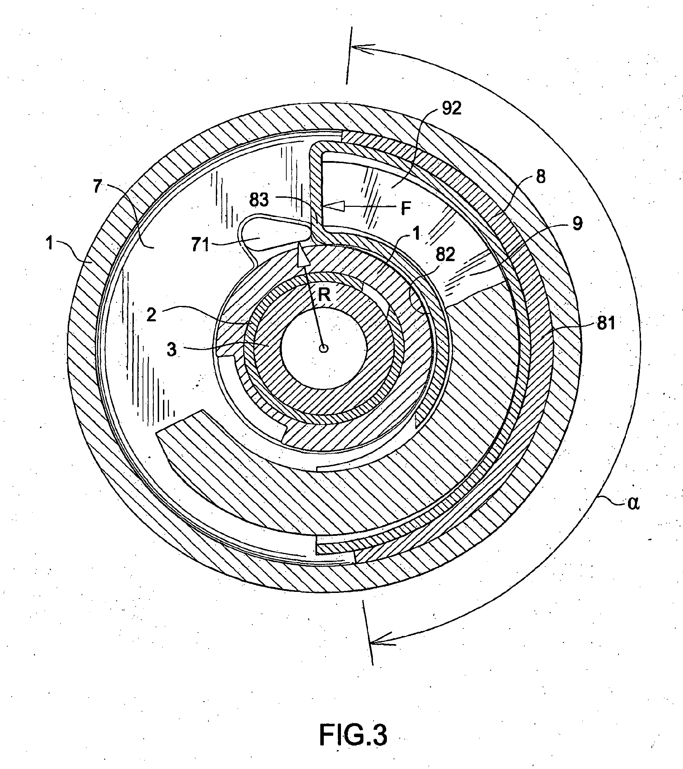

Fig. 3 is a plan view at 3-3 of Fig. 1. In operation damping mechanism 8 is loaded in compression thereby enabling a thin wall structure to be used. Namely, spring 9 is held in compression between arm 1 and base 7, thereby pressing damping mechanism 8 into base 7.

Frictional material 81 typically extends through an arc α of approximately 120° up to approximately 200°. In the preferred embodiment arc α is approximately 180°.

Spring 9 presses damping mechanism 8 into engagement against stop 71 in base 7. Stop 71 is disposed to contact the damping mechanism at a radially inward portion 83, at a radius R. Radius R positions stop 71 to have sufficient clearance from arm 1 while keeping stop 71 radially inward when compared to the position of damping mechanism 8.

Engaging stop 71 with portion 83 in this manner enhances the characteristic of the damping mechanism to move radially outward during operation by using stop 71 as a pivot. Namely, a spring force F applied by end 92 to damping mechanism 8 generates a torque about stop 71, which in turn causes damping mechanism 8 to partially rotate or pivot about stop 71. The outer surface spring 9 radially supports and presses damping mechanism 8 and thereby frictional material 91 radially outward into contact with inner surface 11 of arm 1 to create friction damping. The friction damping damps oscillatory movements or arm 1 when the tensioner is in operation.

Base 7 is rigidly mounted to an engine (not shown) by use of a bolt engaged through bore 31.

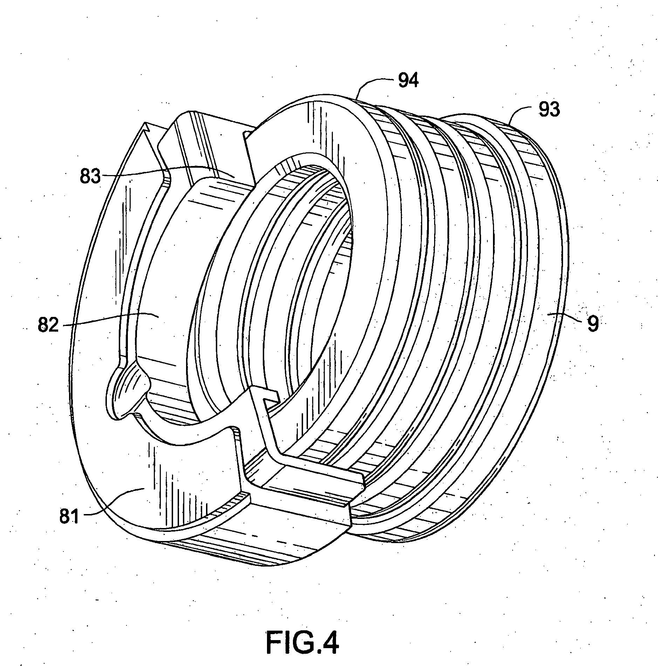

Fig. 4 is a bottom perspective view of the spring and damping mechanism. End 92 engages frame member 82 immediately opposite portion 83. The diameter of volute 93 is slightly greater than the diameter of volute 94. This allows the spring end 92 to be inserted into the frame member 83. The difference in diameter of volute 93 compared to volute 94 is approximately equal to the thickness of frame member 82 material. A volute 94 is further supported by a bears upon portion 83. End 92 presses along the length of frame 82 as well, thereby urging the damping mechanism 8 and material 81 into frictional contact with base 7 (not shown).

Although a form of the invention has been described herein, it will be obvious to those skilled in the art that variations may be made in the construction and relation of parts and method without departing from the scope of the invention described herein.

## Claims

1. A tensioner comprising:
a base (7);
a pivot arm (1) pivotally engaged with the base about a shaft (3);
a torsion spring (9) engaged between the base and the pivot arm, the torsion spring being loadable by movement of the arm in an unwinding direction;
a damping mechanism (8) frictionally engaged with an arm inner surface (11) and in a pressing engagement with the base, and further bearing upon a stop (71) on the base; and
the damping mechanism being urged radially outward into engagement with the inner surface of the arm as the torsion spring is loaded in the unwinding direction and by a pivotal motion of the damping mechanism about the stop (71).

2. The tensioner as in claim 1, wherein the shaft comprises a bore for engaging a mounting member.

3. The tensioner as in claim 1, wherein the damping mechanism comprises a frictional material (81) engagable with the arm inner surface having an arc α length of approximately 180°.

4. The tensioner as in claim 1, wherein the torsion spring comprises a flat band spring.

5. The tensioner as in claim 1, wherein the stop (71) engages the damping mechanism at a radially inward portion (83).

## Patentansprüche

1. Spannvorrichtung, umfassend:
eine Basis (7),
einen Schwenkarm (1), der schwenkend mit der Basis um eine Welle (3) in Eingriff steht,
eine Torsionsfeder (9), die zwischen der Basis und dem Schwenkarm in Eingriff steht, wobei die Torsionsfeder durch Bewegung des Arms in einer Abwickelrichtung belastet werden kann,
einen Dämpfungsmechanismus (8), der mit einer Innenfläche (11) des Arms in Reibeingriff und mit der Basis in pressendem Eingriff steht und ferner einen Anschlag (71) an der Basis beaufschlagt, und
wobei der Dämpfungsmechanismus radial nach außen in Eingriff mit der Innenfläche des Arms gedrängt wird, wenn die Torsionsfeder in der Abwickelrichtung belastet wird und durch eine Schwenkbewegung des Dämpfungsmechanismus um den Anschlag (71).

2. Spannvorrichtung nach Anspruch 1, wobei die Welle eine Bohrung zur Ineingriffnahme eines Montageelements umfasst.

3. Spannvorrichtung nach Anspruch 1, wobei der Dämpfungsmechanismus ein Reibmaterial (81) umfasst, das mit der Innenfläche des Arms in Eingriff bringbar ist und eine Bogen-α-Länge von ungefähr 180° hat.

4. Spannvorrichtung nach Anspruch 1, wobei die Torsionsfeder eine Bandfeder umfasst.

5. Spannvorrichtung nach Anspruch 1, wobei der Anschlag (71) den Dämpfungsmechanismus an einem radial inneren Abschnitt (83) in Eingriff nimmt.

## Revendications

1. Tendeur comprenant :
une base (7) ;
un bras pivotant (1) engagé de manière pivotante avec la base autour d'un arbre (3) ;
un ressort de torsion (9) en prise entre la base et le bras pivotant, le ressort de torsion pouvant être chargé par le mouvement du bras dans une direction de déroulement ;
un mécanisme d'amortissement (8) en prise par friction avec une surface interne du bras (11) et en prise de pression avec la base, et s'appliquant en outre contre une butée (71) sur la base ; et
le mécanisme d'amortissement étant poussé radialement vers l'extérieur en prise avec la surface interne du bras à mesure que le ressort de torsion est chargé dans la direction de déroulement et par un mouvement de pivotement du mécanisme d'amortissement autour de la butée (71).

2. Tendeur selon la revendication 1, dans lequel l'arbre comprend un alésage pour l'engagement d'un organe de montage.

3. Tendeur selon la revendication 1, dans lequel le mécanisme d'amortissement comprend un matériau de friction (81) pouvant s'engager avec la surface interne du bras, ayant une longueur d'arc α d'environ 180°.

4. Tendeur selon la revendication 1, dans lequel le ressort de torsion comprend un ressort à ruban plat.

5. Tendeur selon la revendication 1, dans lequel la butée (71) s'engage avec le mécanisme d'amortissement au niveau d'une portion radialement vers l'intérieur (83).
